# EUROPEAN PATENT APPLICATION

(11) **EP 4 578 585 A1**
(43) Date of publication of application: **02.07.2025**
(21) Application number: 23871699.7
(22) Date of filing: 30.08.2023
(51) Int. Cl.: B23K 11/11, B23K 11/16, B23K 11/36

(54) **RESISTANCE SPOT WELDING METHOD AND WELDED JOINT MANUFACTURING METHOD**

(30) Priority: 29.09.2022 JP 2022157121
(71) Applicant: JFE Steel Corporation, Tokyo 100-0011 (JP)
(72) Inventor: ENDOH, Kazuki, Tokyo 100-0011 (JP); MAEDA, Satoshi, Tokyo 100-0011 (JP); TOJI, Yuki, Tokyo 100-0011 (JP); KAWABE, Nao, Tokyo 100-0011 (JP)
(74) Representative: Haseltine Lake Kempner LLP
(86) International application number: PCT/JP2023/031609
(87) International publication number: WO 2024/070459

(57) **Abstract**

It is provided a resistance spot welding method that is compatible with the production of a welded joint that exhibits excellent delayed fracture resistance. It is a resistance spot welding method wherein two or more overlapped steel sheets are clamped by a pair of welding electrodes, and current is applied while applying pressure to the steel sheets to form a nugget on the mutual overlapped surfaces of the steel sheets to join the steel sheets, the resistance spot welding method including, after the joining, applying a steady magnetic field to a weld mark produced on a surface of a steel sheet after joining by the joining, such that an angle θ between a normal direction of the surface of the steel sheet after joining and a direction of application of the steady magnetic field exceeds 0° and the magnetic flux density is 0.1 T to 15 T.

## Description

### TECHNICAL FIELD

This disclosure relates to a resistance spot welding method and a welded joint manufacturing method using the resistance spot welding method.

### BACKGROUND

Resistance spot welding is widely used for processing the exterior of automobiles and other vehicles because of the well-finished appearance. Resistance spot welding is one of the techniques for joining metals by applying pressure to the metals. Specifically, resistance spot welding is a technique for joining metals by applying electrodes to two or more metals (e.g., steel sheets) to be joined, from both sides, gradually melting the metals through current passage while applying moderate pressure, and then cooling the metals to solidify the molten portion. The heat-affected zone (HAZ) formed in and around the metal-to-metal joined site, which has undergone melting due to joining, is called a nugget. The site joined through the nugget is called a welded joint.

In resistance spot welding, high tensile stress remains in the nugget part during the metal melting and solidification process. In addition, during the above melting and solidification process in welding, a rust-preventive oil, moisture, a coating or plating, a surface treatment agent, etc. present on the surface of the steel sheet are incorporated into the metal, and hydrogen is generated or enters the metal. This hydrogen is likely to accumulate in the tensile stress portion, resulting in the problem of delayed fracture in the welded joint due to residual stress and hydrogen in the nugget, in the metal after welding and cooling.

Delayed fracture is a phenomenon in which the metal suddenly fractures after a certain amount of time has elapsed since the completion of welding or other processing, even though the stress applied to the metal is equal to or less than its yield stress.

On the other hand, high strength steel sheets are sometimes used as steel sheets for automobiles and other vehicles to improve crashworthiness by strengthening the automotive bodies. In general, high strength steel sheets are steel sheets with increased strength by adding not only large amounts of C but also various alloying elements but are highly susceptible to hydrogen embrittlement. Therefore, the above-described delayed fracture is a particularly significant problem in resistance spot welding of high strength steel sheets.

In response to such a problem of delayed fracture, in JP6194765B2 (PTL 1), delayed fracture resistance is improved by performing welding current at a certain electrode force, followed by subsequent-current at a higher electrode force than the above electrode force, and then further holding electrodes, thereby reducing the tensile residual stress in the welded portion. PTL 1 also discloses that further "post-weld heat treatment" at 120 °C to 220 °C for 100 s to 6000 s after the above electrode holding is advantageous in preventing delayed fracture by reducing the amount of hydrogen that has entered the welded portion.

### CITATION LIST

### Patent Literature

PTL 1: JP6194765B2

### SUMMARY

### (Technical Problem)

However, PTL 1 is a technique that primarily focuses on reducing tensile residual stress by optimizing the electrode force and current pattern for delayed fracture, and there was room for further improvement in the hydrogen embrittlement of steel sheets. Furthermore, with regard to this hydrogen embrittlement, there is a concern that in the technique in PTL 1, the welded portion is rapidly cooled in the no-current cooling time provided between the welding current and the subsequent-current, and much hydrogen thus remains without diffusing out of the nugget to increase the amount of residual hydrogen in the nugget, thus making it difficult to suppress delayed fracture caused by the residual hydrogen. Moreover, even if the "post-weld heat treatment" disclosed in PTL 1 is performed for the residual hydrogen, there are further concerns that higher costs for heat treatment facilities are inevitable and that material properties may change due to changes in the steel sheet microstructure caused by the heat treatment.

Therefore, it was necessary to investigate a method to better control hydrogen remaining in the nugget in resistance spot welding, in order to obtain a welded joint that exhibits more excellent delayed fracture resistance.

In view of the above problem, it could be helpful to provide a resistance spot welding method and a welded joint manufacturing method that can obtain a welded joint that exhibits excellent delayed fracture resistance, by improving hydrogen embrittlement.

### (Solution to Problem)

In order to solve the above problem, the inventors have investigated ways to improve the delayed fracture resistance of a welded joint to be obtained, by releasing hydrogen that has been generated in or entered the nugget during resistance spot welding to the outside of the steel sheet. As a result, the inventors have made a new finding that the application of a steady magnetic field to a steel sheet after joining (joint) is effective in improving the delayed fracture resistance of the welded joint without any change in material property caused by microstructural change due to heat treatment.

Then, the inventors have found that, in resistance spot welding, a welded joint that exhibits excellent delayed fracture resistance can be easily obtained by applying a steady magnetic field under predetermined conditions to the steel sheet after joining where a nugget has been formed.

The present disclosure is based on the above findings, and we provide:
[1] A resistance spot welding method wherein two or more overlapped steel sheets are clamped by a pair of welding electrodes, and current is applied while applying pressure to the steel sheets to form a nugget on the mutual overlapped surfaces of the steel sheets to join the steel sheets,
   the resistance spot welding method including, after the joining, applying a steady magnetic field to a weld mark produced on a surface of a steel sheet after joining by the joining, such that an angle θ between a normal direction of the surface of the steel sheet after joining and a direction of application of the steady magnetic field exceeds 0° and the magnetic flux density is 0.1 T to 15 T.

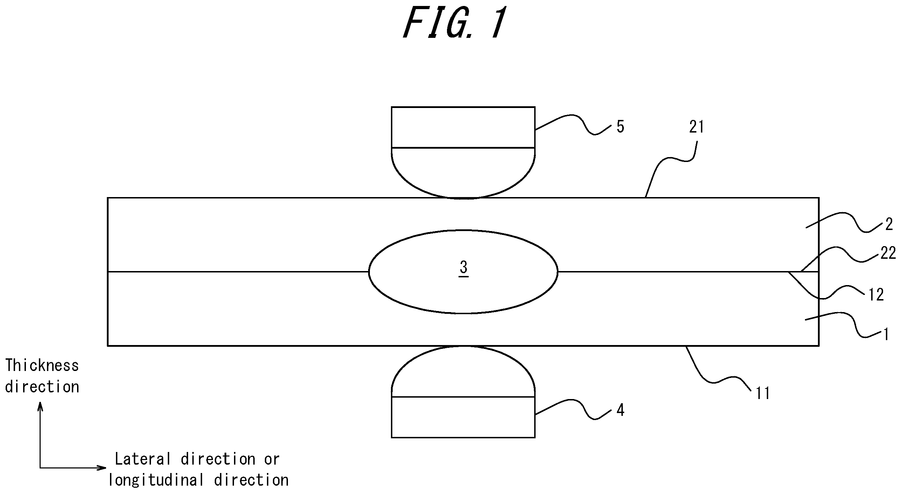

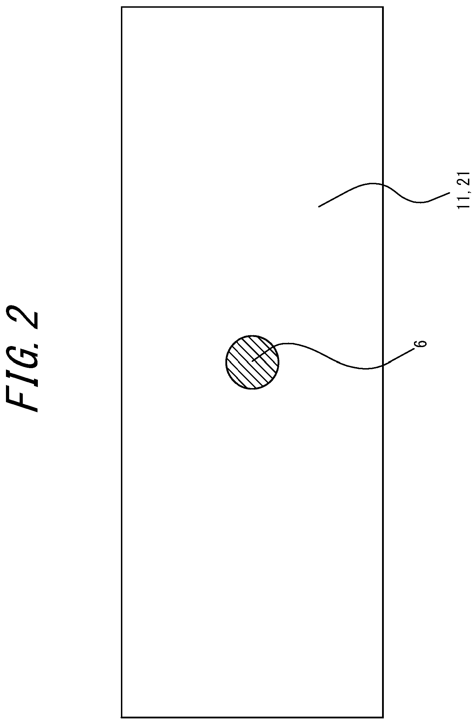

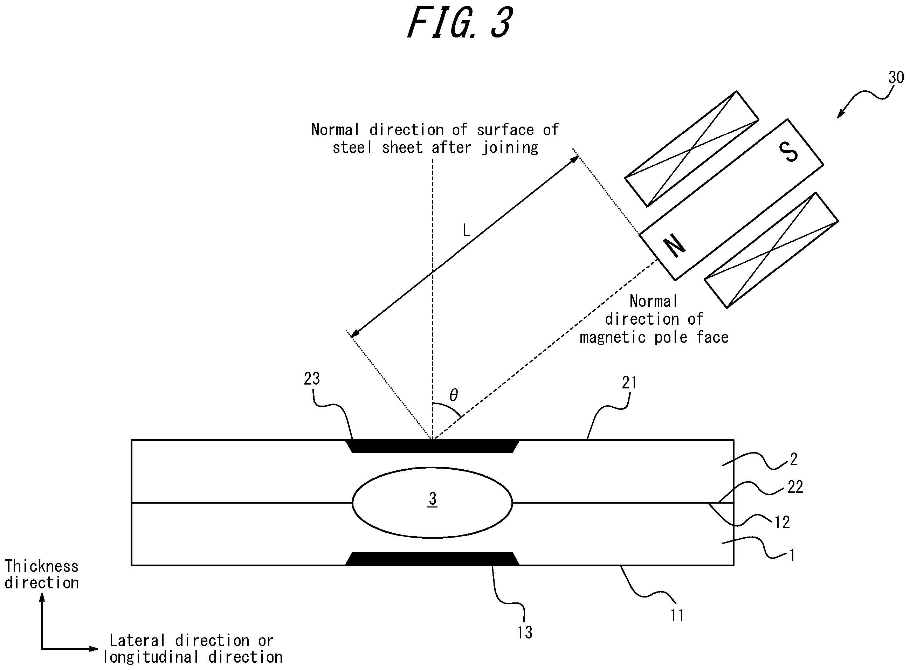

The "nugget" is herein usually formed on the mutual overlapped surfaces (see reference signs 12 and 22 in FIGS. 1 and 3) of the steel sheets and cannot be directly viewed from the surfaces (see reference signs 11 and 21 in FIGS. 1 and 3) of the steel sheet after resistance spot welding. However, it can be confirmed that the "nugget" is formed with weld marks (see reference sign 6 in FIG. 2 and reference signs 13 and 23 in FIG. 3), which are resistance spot welding points produced on the surfaces of the overlapped steel sheets during this welding.

The "magnetic flux density" herein can be measured, for example, according to the method described below.
[2] The resistance spot welding method according to 1 above, wherein the time for applying the steady magnetic field is 1 second or more.
[3] The resistance spot welding method according to 1 or 2 above, wherein at least one of the steel sheets has a tensile strength of 780 MPa or more.
[4] The resistance spot welding method according to any of 1 to 3 above, wherein at least one of the steel sheets has a coating or plating on at least one surface.
[5] The resistance spot welding method according to 4 above, wherein the coating or plating is a hot-dip galvanized coating or a galvannealed coating.
[6] A welded joint manufacturing method, including obtaining a welded joint by joining steel sheets using the resistance spot welding method according to any of [1] to [5].

### (Advantageous Effect)

According to the resistance spot welding method of this disclosure, even when steel sheets are joined, the problem of delayed fracture can be well avoided without any change in material property of the steel sheets due to microstructural changes caused by heat treatment. The welded joint manufacturing method of this disclosure can easily obtain a welded joint that exhibits excellent delayed fracture resistance.

### BRIEF DESCRIPTION OF THE DRAWINGS

In the accompanying drawings:
FIG. 1 is a schematic diagram illustrating a state where steel sheets are joined by forming a nugget, according to one of the disclosed embodiments;
FIG. 2 is a plan view of a steel sheet after joining, viewed from one surface side, according to one of the embodiments; and
FIG. 3 is a schematic diagram illustrating a state where a weld mark on the surface of the steel sheet after joining is irradiated with a steady magnetic field, after the steel sheets are joined, according to one of the embodiments.

### DETAILED DESCRIPTION

Embodiments of this disclosure are described below with reference to the drawings.

In a resistance spot welding method of this disclosure, two or more overlapped, for example, steel sheets 1 and 2 are clamped by a pair of welding electrodes 4 and 5, and current is applied while applying pressure to form a nugget 3 on mutual overlapped surfaces (overlapped portions) 12 and 22 of the steel sheets, and the steel sheets are then joined. During the joining, a steady magnetic field is applied at a predetermined angle θ and a predetermined magnetic flux density to at least one of weld marks 13 and 23 produced on the surfaces of the overlapped steel sheets.

In accordance with the resistance spot welding method of this disclosure, the problem of delayed fracture of the spot welded portion can be avoided in a good and simple manner without any change in material property caused by microstructural change due to heat treatment, by efficiently releasing hydrogen that accumulates mainly in the nugget to the outside of the steel sheet.

A welded joint manufacturing method of this disclosure also has the similar features to those of the above-described resistance spot welding method of this disclosure. In accordance with the welded joint manufacturing method of this disclosure, a welded joint with excellent delayed fracture resistance can be easily obtained.

The reason why the delay fracture resistance of the steel sheet can be improved by applying a steady magnetic field to a steel sheet after joining is not clear, but the inventors infer as follows.

That is, when a steady magnetic field is applied under predetermined conditions to a weld mark produced on the surface of overlapped steel sheets during joining, the shape of the steel sheet changes due to the magnetostriction effect. The shape change is due to the expansion of the lattice spacing, which increases the diffusion rate of hydrogen in the steel sheet and desorbs hydrogen from this surface due to the decrease in potential energy for diffusion. It is inferred that the magnetic field applied to the steel sheet under the predetermined conditions sufficiently and efficiently reduces diffusible hydrogen in the steel and, in turn, sufficiently and efficiently reduces hydrogen that accumulates in the steel, in particular, in the nugget, the tensile residual stress portion, thereby improving the delayed fracture resistance of the welded joint.

The resistance spot welding method of this disclosure is described in detail below according to several embodiments. However, the resistance spot welding method of this disclosure is not limited to these embodiments. The welded joint manufacturing method of this disclosure has the similar features to those detailed for the resistance spot welding method of this disclosure. The welded joint manufacturing method of this disclosure is also not limited to the embodiments described below.

### <Joining of steel sheets>

The resistance spot welding method of this disclosure can efficiently release hydrogen from the nugget after the steel sheets are joined. Therefore, no particular limit is placed on the process of joining a plurality of steel sheets to obtain a welded body, and the process may follow general resistance spot welding conditions. As general current passage conditions for resistance spot welding, for example, the current can be 1 kA to 15 kA, the current passage time can be 100 ms to 2000 ms, and the electrode force can be 0.5 kN to 10 kN.

In one of the embodiments illustrated in FIGS. 1 and 2, a pair of welding electrodes 4 and 5 are pressed against surfaces 11 and 21 of two overlapped steel sheets 1 and 2 to apply current. At this time, the sites to which current is applied, of the mutual overlapped surfaces 12 and 22 of the steel sheets melt once due to resistance heating and then solidify to form a nugget 3. Thus, in the resistance spot welding method, the steel sheets 1 and 2 are joined through the nugget 3 in a solid state. This nugget 3 usually does not appear directly on the surfaces 11 and 21 of the steel sheet after joining. However, the surfaces 11 and 21 of the steel sheet after joining have burn marks and/or concave weld marks 6 at the points against which the welding electrodes 4 and 5 were pressed. Therefore, it can be confirmed that the nugget 3 exists inside in the thickness direction of these weld marks 6, resistance spots. The weld mark 6 is also referred to as a "nugget corresponding surface" in the process of applying a steady magnetic field, which is described below.

### <<Properties of steel sheet>>

No particular limit is placed on the steel sheet used in the resistance spot welding method of this disclosure. However, the steel sheet is preferably a high strength steel sheet. Specifically, the tensile strength of at least one of a plurality of steel sheets to be joined is preferably 780 MPa or more, more preferably 1000 MPa or more, and further preferably 1300 MPa or more. It is even more preferable that all of the plurality of steel sheets to be joined have the above tensile strength. When the tensile strength of the steel sheet to be joined is less than 780 MPa, the degree of tensile residual stress generated in the nugget by resistance spot welding is small. Thus, delayed fracture is originally unlikely to occur in the resulting welded joint. On the other hand, when the steel sheet to be joined has higher strength as described above, hydrogen is likely to be generated in or to enter the nugget by resistance spot welding, and delayed fracture is likely to occur in the welded joint, which increases the effect of improving the delayed fracture resistance of the welded joint through application of a steady magnetic field. No particular limit is placed on the tensile strength of the steel sheet. However, the tensile strength of the steel sheet can be 3000 MPa or less.

No particular limit is placed on the chemical composition of the steel sheet. However, it is preferable to have a chemical composition with which a high strength steel sheet as described above can be obtained. As the chemical composition for the high strength steel sheet, for example, a steel sheet with a C content of 0.05 mass% or more and 0.50 mass% or less can be suitably used.

### <<Surface treatment for steel sheet>>

The resistance spot welding method of this disclosure is a welding method in which the application of a steady magnetic field is non-contact and is not affected by the surface condition of the steel sheet. Thus, any surface treatment such as coating or plating can be applied to the steel sheet to be joined for the purpose of imparting desired properties. It is preferable that surface treatment is applied to at least one surface of at least one of the plurality of steel sheets to be joined. The at least one surface may be a surface corresponding to the surface of the steel sheet after joining or may be a surface corresponding to the overlapped surface.

The coating or plating by surface treatment may be organic, inorganic, or metal coating and may be performed according to known methods. In particular, from the viewpoint of being able to prevent rust and corrosion, it is preferable that the coating or plating is a hot-dip galvanized (GI) coating or a galvannealed (GA) coating.

### <<Application of steady magnetic field>>

Next, in the resistance spot welding method of this disclosure, a steady magnetic field is intentionally applied to at least one of the weld marks (nugget corresponding surfaces) after the above-described joining of the steel sheets. Here, when applying a steady magnetic field, it is important that the steady magnetic field with a magnetic flux density of 0.1 T or more and 15 T or less is applied such that the angle θ between a normal direction of the surface of the steel sheet after joining and a direction of application of the steady magnetic field exceeds 0°. By controlling the angle θ as described above, hydrogen can be efficiently released from the nugget, and delayed fracture of the welded joint due to hydrogen embrittlement can be reduced in a good and simple manner without any change in material property caused by microstructural change due to heat treatment.

The application of a steady magnetic field in this disclosure is performed without contact with the steel sheet.

### <<Magnetic flux density>>

From the viewpoint of promoting hydrogen diffusion and sufficiently desorbing hydrogen contained in the steel sheet, the magnetic flux density to the weld mark on the surface of the steel sheet after joining is preferably 0.1 T or more, more preferably 0.2 T or more, and further preferably 0.5 T or more. On the other hand, considering the performance of a general magnetic field application device, the magnetic flux density to the weld mark on the surface of the steel sheet after joining is preferably 15 T or less, and more preferably 14 T or less. The "magnetic flux density" can be measured in the vicinity of the weld mark using a Tesla meter, for example, by placing the probe of the Tesla meter in a non-contact position directly above the weld mark.

The magnetic flux density received by the weld mark (nugget corresponding surface) can be adjusted, for example, by adjusting the number of coil turns and current value of the magnetic field application device.

### <<Angle θ between normal direction of surface of steel sheet after joining and normal direction of magnetic pole face>>

The angle θ between the normal direction of the surface of the steel sheet after joining and the direction of application of the steady magnetic field exceeds 0°, which is also an important constitutive condition in this disclosure. Even if a steady magnetic field is applied at an angle θ of 0°, hydrogen diffusion out of the steel sheet is not promoted and the amount of hydrogen in the nugget is not sufficiently reduced because the direction in which the lattice spacing expands is parallel to the sheet surface. When the angle θ is large, the direction in which the lattice spacing expands is close to perpendicular to the sheet surface, which allows more residual hydrogen to be released from the steel, in particular, from the nugget, thereby reducing delayed fracture. The angle θ is preferably 15° or more, and more preferably 30° or more. The upper limit of the angle θ is 90°. In this case, the steady magnetic field is applied parallel to the surface of the steel sheet.

### <<Magnetic field application time>>

When the time for applying a magnetic field to the weld mark (nugget corresponding surface) is short, it may not be sufficient to desorb the hydrogen remaining in the nugget out of the steel sheet, and the amount of hydrogen in steel may not be reduced well. Therefore, the time for applying a steady magnetic field is preferably 1 second or more, more preferably 5 seconds or more, and further preferably 10 seconds or more.

On the other hand, applying a steady magnetic field to the weld mark for 3600 seconds or more reduces productivity. Therefore, the time for applying a steady magnetic field is preferably less than 3600 seconds, more preferably 1800 seconds or less, and further preferably 1500 seconds or less.

### <<Time from start of current passage to start of application of steady magnetic field>>

Delayed fracture caused by resistance spot welding using welding electrodes may occur between 180 minutes and 720 minutes, with 0 seconds at the start of current passage. It is preferable to apply a steady magnetic field before such delayed fracture occurs to suppress or eliminate hydrogen accumulation in the nugget, which is the tensile stress portion of the steel sheet after joining. From this viewpoint, the application of a steady magnetic field to the weld mark (nugget corresponding surface) is preferably performed within 360 minutes from the start of current passage to the steel sheet, more preferably performed in less than 180 minutes, and further preferably performed within 60 minutes. From the viewpoint of avoiding risk of delayed fracture even a little, a shorter time from the start of current passage to the start of applying a steady magnetic field is advantageous. Therefore, although no particular lower limit is placed on the time from the start of current passage to the start of applying a steady magnetic field, considering the time required for current passage itself, the lower limit of the above time is usually 10 seconds.

### <<Amount of residual hydrogen in nugget>>

In the nugget after resistance spot welding is performed according to this disclosure, the amount of residual hydrogen is preferably 0.5 ppm or less by mass fraction, more preferably 0.3 ppm or less, and, of course, may be 0 ppm. Hydrogen remaining in the nugget can cause hydrogen embrittlement in the welded joint. Thus, a lower amount of residual hydrogen is preferable. In general, resistance spot welding of the high strength steel sheet is more prone to delayed fracture. However, in this disclosure, a steady magnetic field is applied under the predetermined conditions, which can reduce the amount of residual hydrogen well even in a case of the high strength steel sheet.

### <<Magnetic field application device>>

For the application of a steady magnetic field, a general device that generates a magnetic field to apply it to the object (magnetic field application device) can be used. Examples of the magnetic field application device include an electromagnet. In one example, the magnetic field application device can be a pair of electromagnets each located on the upper steel sheet side and the lower steel sheet side. Each electromagnet can have an iron core, a coil that winds around the iron core, and a driving power source to pass current through the coil. By turning on the driving power source and applying a continuous DC current to the coil, each electromagnet can be magnetized to generate a steady magnetic field. Each electromagnet has a magnetic pole face located opposed to the weld mark (nugget corresponding surface) having a predetermined interval. By controlling the direction of the current flowing through the coil, the magnetic pole face of one electromagnet can be set to N-pole, and the magnetic pole face of the other electromagnet can be set to S-pole. This pair of magnetic pole faces can face one another across the weld marks (nugget corresponding surfaces) on the upper and lower surfaces of the overlapped steel sheets. In this way, the steady magnetic field generated by the pair of electromagnets can be configured such that its main magnetic flux is directed from the magnetic pole face (N-pole) of one electromagnet to the magnetic pole face (S-pole) of the other electromagnet. This direction can be the direction of application of a steady magnetic field. In this case, the direction of the steady magnetic field will coincide with the normal direction of the magnetic pole face. This allows uniform application of a steady magnetic field at the predetermined angle θ with respect to the normal direction of the surface of the steel sheet after joining. In this case, the angle θ can be the angle between the normal direction of the magnetic pole face and the normal direction of the magnetic pole face, and the normal direction of the magnetic pole face can be a straight line connecting the magnetic pole face and the weld mark. In this specification, the "continuous DC current" means a DC current with which the current value is maintained continuously (preferably constant) rather than in pulses. The "steady magnetic field" herein means a magnetic field that is maintained continuously rather than in pulses, and includes the magnetic field formed by a stationary magnet and the magnetic field formed by an electromagnet supplied with a continuous DC current.

So long as the above predetermined steady magnetic field is applied to the weld mark (nugget corresponding surface), no particular limit is placed on the method of installation of the magnetic field application device. For example, a magnetic field application device 30 may be installed such that, for the direction of application of a steady magnetic field, the steady magnetic field is applied to at least one of the weld marks (reference signs 13 and 23 in FIG. 3) at a shortest linear distance (L in FIG. 3) with the angle θ.

When there are a plurality of weld marks on one surface of the steel sheet after joining, one magnetic field application device may be provided for each weld mark 13 or 23, or one or more magnetic field application devices may be provided that can apply a steady magnetic field across a plurality of nugget corresponding surfaces on one surface. The magnetic field application device may be provided opposite to each of the surfaces 11 and 21 of the steel sheet after joining.

When there are a plurality of weld marks on one surface, a steady magnetic field may be applied to only one of the weld marks, a steady magnetic field may be applied to any plurality of weld marks, a steady magnetic field may be applied to all weld marks, or a steady magnetic field may be applied over one entire surface of the steel sheet after joining. Considering that hydrogen is likely to remain, in particular, in the nugget, when there are a plurality of weld marks on one surface, it is preferable to apply a steady magnetic field to a plurality of weld marks, and it is more preferable to apply a steady magnetic field to all weld marks.

From the viewpoint of increasing the effect on delayed fracture resistance at the above predetermined frequency, the shortest linear distance between the surface of the steel sheet and the magnetic field application device is preferably within 15 m, and more preferably within 5 m.

This disclosure can reduce residual hydrogen in the nugget without heating treatment. Therefore, in accordance with this disclosure, it is possible to obtain a welded joint that exhibits excellent delayed fracture resistance while avoiding the risk that the chemical composition and/or microstructure of the steel sheet changes from the desired state by heat, compared with conventional techniques where heat treatment is performed after welding. Moreover, this disclosure does not require a heating device to deal with hydrogen brittleness, which is advantageous in terms of work time and work cost.

Furthermore, this disclosure, which employs a simple method of applying a steady magnetic field without contact with the steel sheet, can be used particularly advantageously in resistance spot welding, for example, in automobile manufacturing where many small welding operations are required.

### EXAMPLES

The present disclosure will be described in more detail based on examples. The following examples merely represent preferred examples of this disclosure, and this disclosure is by no means limited to these examples.

Two steel sheets of 150 mm in the longitudinal direction × 50 mm in the lateral direction × 1.4 mm in the sheet thickness were used as a lower steel sheet 1 located vertically below and an upper steel sheet 2 located vertically above the lower steel sheet 1. The tensile strengths of the lower steel sheet 1 and the upper steel sheet 2, and the presence or absence of coating or plating on the surface and overlapped surface of each steel sheet are presented in Table 1. The presence or absence of coating or plating includes a case without coating or plating treatment (CR) and a case with coating or plating treatment (hot dip galvanizing (GI) or galvannealing (GA) with a coating weight of 50 g/m² per side).

The tensile strength is the tensile strength determined by preparing a JIS No. 5 tensile test piece from each steel sheet along a direction perpendicular to the rolling direction and conducting a tensile test in accordance with the provisions of JIS Z 2241 (2011).

As illustrated in FIGS. 1 and 2, a welded joint was obtained by clamping a sheet combination formed of two overlapped steel sheets (lower steel sheet 1 and upper steel sheet 2) by a pair of welding electrodes (lower electrode 4 and upper electrode 5) and joining the two overlapped steel sheets under the joining (current passage) conditions presented in Table 1. This joining produced a weld mark 6 (represented schematically as an oval) on each surface of the steel sheet after joining (welded joint).

The above-described process was performed with the lower electrode 4 and the upper electrode 5 always water-cooled and the steel sheet at room temperature (20 °C).

The lower electrode 4 and the upper electrode 5 were both DR-type electrodes made of chromium copper with a diameter of the tip (tip diameter) of 6 mm and a curvature radius of 40 mm. The electrode force during joining was controlled by driving the lower electrode 4 and the upper electrode 5 with a servo motor, and single-phase alternating current at a frequency of 50 Hz was supplied during current passage.

Thus, the weld marks 6 were observed on the surfaces 11 and 21 of the lower steel sheet 1 and the upper steel sheet 2 after joining, as illustrated in FIG. 2. A nugget 3 illustrated schematically in FIG. 1 is formed on the overlapped surfaces 12 and 22 of the lower steel sheet 1 and the upper steel sheet 2 along the thickness direction from these weld marks 6. Two welded joints were produced under each current passage conditions to measure each of the amounts of residual hydrogen in the nugget before and after the application of a steady magnetic field.

After joining the steel sheets through current passage as described above, a steady magnetic field was applied to the weld mark 6 (nugget corresponding surface) of one of the welded joints obtained under each current passage conditions, from one side of the surface of the steel sheet after joining (welded joint), under the conditions presented in Table 1, after "Time from start of current passage to start of applying magnetic field" presented in Table 1 had passed. The application of a steady magnetic field was performed using an electromagnet installed at a position where the length of a straight line connecting the weld mark 6 and the magnetic pole face (shortest straight line distance, L in FIG. 3) was 0.5 m. The magnetic flux density was controlled by the current value. The magnetic flux density was measured by placing the probe tip of a Tesla meter (F41 Model produced by Lake Shore Cryotronics Inc.) parallel to the surface of the steel sheet, at a height of 5 cm from the surface, directly above the weld mark. The angle θ is the angle between the normal direction of the surface of the steel sheet after joining (welded joint) and the straight line connecting the weld mark 6 and the magnetic pole face.

The resulting welded joint was allowed to stand in air at room temperature (20 °C) for 24 hours and then visually determined whether delayed fracture occurred after standing. Furthermore, when no separation or cracking of the nugget was visually observed from the surface, the cross section in the thickness direction including the center of the nugget was observed under an optical microscopy (50 magnifications) to check the presence or absence of cracks in the cross section. The case where nugget separation (a phenomenon where the nugget separates into two parts at the joining interface) had been observed was designated as D, the case where cracks had been visually observed from the surface was designated as C, the case where the cross section in the thickness direction including the center of the nugget had been observed, and cracks that do not reach the surface had been observed in the cross section was designated as B, and the case where no cracks had been confirmed even in the cross section was designated as A to perform evaluation. The results are presented in Table 1. The case (A) where no cracks had been confirmed even in the cross section and the case (B) where cracks that do not reach the surface had been observed in the cross section were determined to have excellent delayed fracture resistance of the welded joint.

The amount of residual hydrogen in the nugget was measured by temperature-programmed desorption analysis. For the amount of residual hydrogen before the application of a steady magnetic field, a sample was cut out to have a size of 1 cm × 1 cm × the sheet thickness including the resistance spot welding point at the center, from the welded joint on which a steady magnetic field had not been applied, of the welded joints obtained under each current passage conditions, and the sample was degreased with ethanol and then subjected to temperature-programmed desorption analysis. For the amount of residual hydrogen after the application of a steady magnetic field, a sample was cut out to have a size of 1 cm × 1 cm × the sheet thickness including the resistance spot welding point at the center, from the welded joint on which a steady magnetic field had been applied, of the above welded joints, and the sample was degreased with ethanol and then subjected to temperature-programmed desorption analysis. Each sample was heated at 200 °C/hour, and the amount of hydrogen released from the sample was quantified every 5 minutes using a gas chromatograph to determine the hydrogen release rate (wt/min) at each temperature. The amount of hydrogen release was calculated by adding up the determined hydrogen release rates. Then, the parts per million of the value obtained by dividing the integrated value of the amount of hydrogen released up to 210 °C by the mass of the sample was determined as the amount of residual hydrogen in the nugget by mass fraction (wt.ppm), and was presented together in Table 1.

### [Table 1]

**Table 1**

| No. | Steel sheet | | | | Joining (current passage) conditions | | | Application conditions of steady magnetic field | | | | Evaluation | | | | Classification |
|---|---|---|---|---|---|---|---|---|---|---|---|---|---|---|---|---|
| | Upper steel sheet | | Lower steel sheet | | Current (kA) | Current passage time (ms) | Electrode force (kN) | Time from start of current passage to start of applying magnetic field (mm) | Angle between normal direction of surface of steel sheet after joining and normal direction of magnetic pole face (°) | Magnetic flux density (T) | Application time (sec) | Delayed fracture resistance of welded jomnt | Amount of residual hydrogen in nugget after application of steady magnetic field (wt.ppm) | Amount of residual hydrogen in nugget before application of steady magnetic field (wt.ppm) | Hydrogen reduction rate (%) | |
| | Tensile strength (MPa) | Coating or plating | Tensile strength (MPa) | Coating or plating | | | | | | | | | | | | |
| 1 | 1510 | CR | 1510 | CR | 5 | 200 | 5 | - | - | - | - | D | 0.82 | 0.82 | 0 | Comparative Example |
| 2 | 1510 | CR | 1510 | CR | 5 | 200 | 5 | 5 | 0 | 7.5 | 600 | D | 0.69 | 0.87 | 21 | Comparative Example |
| 3 | 1510 | CR | 1510 | CR | 5 | 200 | 5 | 5 | 20 | 7.5 | 600 | B | 0.29 | 0.85 | 65 | Example |
| 4 | 1510 | CR | 1510 | CR | 5 | 200 | 5 | 5 | 40 | 7.5 | 600 | A | 0.13 | 0.80 | 84 | Example |
| 5 | 1510 | CR | 1510 | CR | 5 | 200 | 5 | 5 | 75 | 7.5 | 600 | A | 0.02 | 0.80 | 97 | Example |
| 6 | 1510 | CR | 1510 | CR | 5 | 200 | 5 | 5 | 90 | 7.5 | 600 | A | 0.01 | 0.82 | 99 | Example |
| 11 | 1510 | CR | 1510 | CR | 5 | 200 | 5 | 1 | 75 | 7.5 | 600 | A | 001 | 0.77 | 98 | Example |
| 12 | 1510 | CR | 1510 | CR | 5 | 200 | 5 | 30 | 75 | 7.5 | 600 | A | 002 | 0.77 | 97 | Example |
| 13 | 1510 | CR | 1510 | CR | 5 | 200 | 5 | 60 | 75 | 7.5 | 600 | A | 003 | 0.84 | 96 | Example |
| 14 | 1510 | CR | 1510 | CR | 5 | 200 | 5 | 120 | 75 | 7.5 | 600 | A | 002 | 0.84 | 98 | Example |
| 15 | 1510 | CR | 1510 | CR | 5 | 200 | 5 | 360 | 75 | 7.5 | 600 | A | 0.01 | 0.79 | 99 | Example |
| 16 | 1510 | CR | 1510 | CR | 5 | 200 | 5 | 5 | 75 | 0.03 | 600 | D | 0.74 | 0.82 | 10 | Comparative Example |
| 17 | 1510 | CR | 1510 | CR | 5 | 200 | 5 | 5 | 75 | 16 | 600 | C | 0.51 | 0.79 | 35 | Comparative Example |
| The underlined value represents a value outside the range of this disclosure. | | | | | | | | | | | | | | | | |
| CR: No coating or plating treatment | | | | | | | | | | | | | | | | |
| GI: Hot-dip galvanizing | | | | | | | | | | | | | | | | |
| GA: Galvannealing | | | | | | | | | | | | | | | | |

| | Upper steel sheet | | Lower steel sheet | | Current (kA) | Current passage time (ms) | Electrode force (kN) | Time from start of current passage to start of applying magnetic field (min) | Angle between normal direction of surface of steel sheet after joining and normal direction of magnetic pole face (°) | Magnetic flux density (T) | Application time (sec) | Delayed fracture resistance of welded joint | Amount of residual hydrogen in nugget after application of steady magnetic field (wt.ppm) | Amount of residual hydrogen in nugget before application of steady magnetic field (wt.ppm) | Hydrogen reduction rate (%) | |
|---|---|---|---|---|---|---|---|---|---|---|---|---|---|---|---|---|
| Tensile strength (MPa) | Coating or plating | Tensile strength (MPa) | Coating or plating | | | | | | | | | | | | | |
| 18 | 1510 | CR | 1510 | CR | 5 | 200 | 5 | 5 | 75 | 01 | 600 | A | 009 | 0.82 | 89 | Example |
| 19 | 1510 | CR | 1510 | CR | 5 | 200 | 5 | 5 | 75 | 0.5 | 600 | A | 0.01 | 0.79 | 99 | Example |
| 20 | 1510 | CR | 1510 | CR | 5 | 200 | 5 | 5 | 75 | 15 | 600 | A | 0.01 | 0.80 | 98 | Example |
| 21 | 1510 | CR | 1510 | CR | 5 | 200 | 5 | 5 | 75 | 7.5 | 2 | B | 0.34 | 0.84 | 60 | Example |
| 22 | 1510 | CR | 1510 | CR | 5 | 200 | 5 | 5 | 75 | 7.5 | 8 | A | 0.17 | 0.79 | 79 | Example |
| 23 | 1510 | CR | 1510 | CR | 5 | 200 | 5 | 5 | 75 | 7.5 | 15 | A | 0.11 | 0.81 | 86 | Example |
| 24 | 1510 | CR | 1510 | CR | 5 | 200 | 5 | 5 | 75 | 7.5 | 1200 | A | 002 | 0.84 | 97 | Example |
| 25 | 1510 | CR | 1510 | CR | 5 | 200 | 5 | 5 | 75 | 7.5 | 1800 | A | 001 | 0.79 | 98 | Example |
| 26 | 1510 | CR | 1510 | CR | 5 | 200 | 5 | 5 | 75 | 7.5 | 3500 | A | 002 | 0.77 | 97 | Example |
| 27 | 1522 | GA | 1510 | CR | 5 | 200 | 5 | 5 | 75 | 7.5 | 600 | A | 0.03 | 0.80 | 96 | Example |
| 28 | 1510 | CR | 1522 | GA | 5 | 200 | 5 | 5 | 75 | 7.5 | 600 | A | 0.01 | 0.81 | 99 | Example |
| 29 | 1522 | GA | 1522 | GA | 5 | 200 | 5 | 5 | 75 | 7.5 | 600 | A | 002 | 0.81 | 97 | Example |
| 30 | 1531 | GI | 1510 | CR | 5 | 200 | 5 | 5 | 75 | 7.5 | 600 | A | 002 | 0.84 | 98 | Example |
| 31 | 1510 | CR | 1531 | GI | 5 | 200 | 5 | 5 | 75 | 7.5 | 600 | A | 0.01 | 0.82 | 98 | Example |
| 32 | 1531 | GI | 1531 | GI | 5 | 200 | 5 | 5 | 75 | 7.5 | 600 | A | 003 | 0.78 | 96 | Example |
| 33 | 815 | CR | 815 | CR | 5 | 200 | 5 | 5 | 75 | 7.5 | 600 | A | 0.00 | 0.55 | 99 | Example |
| 34 | 1220 | CR | 1220 | CR | 5 | 200 | 5 | 5 | 75 | 7.5 | 600 | A | 0.01 | 0.64 | 99 | Example |
| 35 | 1310 | CR | 1310 | CR | 5 | 200 | 5 | 5 | 75 | 7.5 | 600 | B | 0.33 | 0.72 | 55 | Example |

| | | | | | | | | | | | | | | | | |
|---|---|---|---|---|---|---|---|---|---|---|---|---|---|---|---|---|
| The underlined value represents a value outside the range of this disclosure. CR: No coating or plating treatment GI: Hot-clip galvanizing GA: Galvannealing | | | | | | | | | | | | | | | | |

From Table 1, it is found that the welded joints obtained through the application of a steady magnetic field according to the predetermined conditions all have sufficiently reduced the amount of residual hydrogen in the nugget, and as a result, no delayed fracture is observed, and good delayed fracture resistance are exhibited. In particular, good delayed fracture resistance could be achieved even for the high strength steel sheet, which was conventionally prone to delayed fracture. On the other hand, in the welded joints of No. 1, 2, 10, 16, and 17, where no steady magnetic field was applied or the application conditions of a steady magnetic field were outside the specified ranges, the amount of residual hydrogen in the nugget was high, and delayed fracture occurred, and delayed fracture caused by residual hydrogen in the nugget could not be controlled.

### INDUSTRIAL APPLICABILITY

According to the resistance spot welding method of this disclosure, the problem of delayed fracture after joining the steel sheets can be avoided well. The welded joint manufacturing method of this disclosure also makes it possible to easily obtain a welded joint that exhibits excellent delayed fracture resistance. Therefore, this disclosure is suitable for resistance spot welding of the high strength steel sheet and can be preferably used in the manufacturing process of automotive parts such as automobiles and the assembly process of automotive bodies.

### REFERENCE SIGNS LIST

- 1: steel sheet (lower steel sheet)

- 11: surface
- 12: mutual overlapped surface of steel sheet
- 13: weld mark
- 2: steel sheet (upper steel sheet)
- 21: surface
- 22: mutual overlapped surface of steel sheet
- 23: weld mark
- 3: nugget
- 4: welding electrode (lower electrode)
- 5: welding electrode (upper electrode)
- 6: weld mark
- 30: magnetic field application device

## Claims

1. A resistance spot welding method wherein two or more overlapped steel sheets are clamped by a pair of welding electrodes, and current is applied while applying pressure to the steel sheets to form a nugget on the mutual overlapped surfaces of the steel sheets to join the steel sheets,
the resistance spot welding method comprising, after the joining, applying a steady magnetic field to a weld mark produced on a surface of a steel sheet after joining by the joining, such that an angle θ between a normal direction of the surface of the steel sheet after joining and a direction of application of the steady magnetic field exceeds 0° and the magnetic flux density is 0.1 T to 15 T.

2. The resistance spot welding method according to claim 1, wherein the time for applying the steady magnetic field is 1 second or more.

3. The resistance spot welding method according to claim 1 or 2, wherein at least one of the steel sheets has a tensile strength of 780 MPa or more.

4. The resistance spot welding method according to any one of claims 1 to 3, wherein at least one of the steel sheets has a coating or plating on at least one surface.

5. The resistance spot welding method according to claim 4, wherein the coating or plating is a hot-dip galvanized coating or a galvannealed coating.

6. A welded joint manufacturing method, comprising obtaining a welded joint by joining steel sheets using the resistance spot welding method according to any one of claims 1 to 5.
